# FASCICULE DE BREVET EUROPEEN

(11) **EP 2 929 379 B1**
(45) Date de publication et mention de la délivrance du brevet: **01.02.2017**
(21) Numéro de dépôt: 13795789.0
(22) Date de dépôt: 28.11.2013
(51) Int. Cl.: G02B 27/00, G02B 27/14, G01J 3/12, G01J 3/02, G01J 3/28, G02B 27/10, G02B 5/20

(54) **COMPOSANT DE SEPARATION SPECTRALE SANS IMAGE PARASITE APPARENTE**
SPEKTRALTRENNUNGSKOMPONENTE OHNE SICHTBARES GEISTERBILD
SPECTRAL SEPARATION COMPONENT WITHOUT A VISIBLE GHOST IMAGE

(30) Priorité: 05.12.2012 FR 1203297
(43) Date de publication de la demande: 14.10.2015
(73) Titulaire: THALES, 92400 Courbevoie (FR)
(72) Inventeur: FORESTIER, Bertrand, F-75015 Paris (FR)
(74) Mandataire: Henriot, Marie-Pierre
(86) Numéro de dépôt international: PCT/EP2013/074921
(87) Numéro de publication internationale: WO 2014/086649

(56) Documents cités:
- EP-A1- 2 163 870
- EP-A2- 1 083 554
- EP-A2- 2 051 050
- US-A- 5 562 334
- US-A1- 2008 080 059

## Description

Le domaine de l'invention est celui des systèmes optroniques multi-spectraux mono-pupille utilisant des capteurs matriciels, comme par exemple les pods de reconnaissance aérienne, les pods de désignation laser ou les systèmes optroniques de secteur frontal équipant les avions d'armes modernes.

Généralement, ces systèmes associent une bande d'imagerie MWIR (3µm-5µm) à une bande d'imagerie Visible (0,4µm-0,7 µm) et/ou NIR(0,7µm-1,1 µm) et/ou SWIR (1,4µm-2,4µm), et des voies laser, typiquement à 1,06 µm et/ou 1,54 µm.

Dans de tels systèmes, on est naturellement amené à séparer spectralement les différentes voies à l'aide d'un ou plusieurs composant(s) de séparation spectrale. On s'intéresse ici au premier étage de la séparation qui transmet par exemple la bande MWIR et réfléchit les autres bandes, les autres étages de séparation concernant la séparation des autres bandes réfléchies par ce premier étage.

La seule solution viable consiste à transmettre la bande MWIR et à réfléchir les longueurs d'onde plus basses. En effet, la solution consistant à réfléchir la bande MWIR et transmettre les longueurs d'onde basses est réputée infaisable, ou du moins particulièrement délicate à mettre en oeuvre du fait de la complexité de l'empilement de couches minces permettant de réaliser la fonction recherchée.

Une séparation utilisant une lame dichroïque en faisceaux parallèles en aval d'un système frontal afocal est intéressante a priori, car elle ne produit ni image parasite, ni aberrations. En revanche, elle nécessite de nombreux composants multi-spectraux en amont du séparateur pour constituer l'afocal frontal, ce qui relativise son intérêt.

Pour garantir une bonne compacité de l'optique et optimiser sa transmission sur l'ensemble des voies, il peut être plus judicieux d'effectuer la séparation en faisceaux convergents, juste en aval de l'objectif de tête multi-spectral. Le sens amont-aval est celui de la lumière se propageant dans le système.

En résumé, on recherche un composant de séparation spectrale :
- transmettant la bande MWIR et réfléchissant des bandes de longueurs d'onde plus basses : Visible (0,4-0,7µm) et/ou NIR (0,7-1,1µm) et/ou SWIR (1,4-2,4µm),
- travaillant en faisceaux convergents,
- ne dégradant pas la Fonction de Transfert de Modulation (FTM), ni en transmission, ni en réflexion,
- ne créant pas d'image parasite perceptible, en particulier dans la bande MWIR.

Les techniques connues de séparation en faisceaux convergents sont les lames dichroïques et les ensembles séparateurs à prismes, que l'on va décrire successivement.

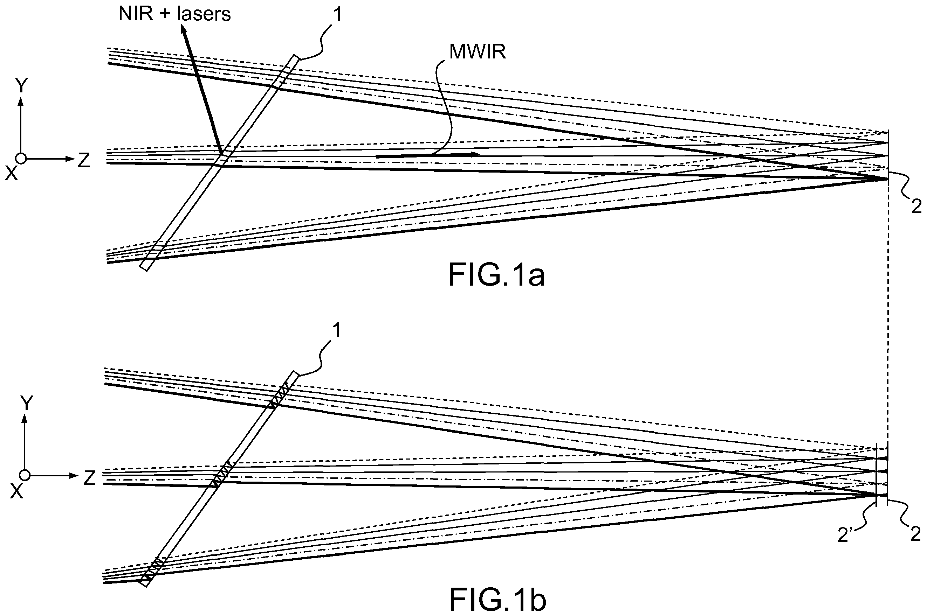

La lame dichroïque 1 est utilisée dans un système en étant inclinée sur son axe optique Oz, d'un angle d'inclinaison se situant typiquement entre 30° et 45° comme montré figures 1a et 1b. L'axe optique suit en fait une ligne brisée et comprend un axe optique selon Oz incident sur la lame et un axe optique réfracté par la lame.

La lame est généralement réalisée en silicium (Si), en germanium (Ge), en sulfure de zinc (ZnS) ou en séléniure de zinc (ZnSe).

La face avant, dichroïque, réfléchit la partie basse du spectre (Visible ou NIR ou SWIR) et transmet la partie haute (MWIR) comme illustré figure 1a par les flèches ; la face arrière est simplement traitée antireflet MWIR. On remarque en outre que dans le plan focal intermédiaire 2, la lame décale franchement les faisceaux utiles vers le bas par rapport à l'axe optique incident.

Si la lame est à faces planes et parallèles, les deux réflexions internes produisent une image parasite MWIR légèrement défocalisée (focalisée dans le plan 2' au lieu du plan 2) et bien décalée vers le haut par rapport à l'image principale, comme le montre la figure 1b, où ne sont pas représentés les faisceaux utiles de la figure 1a pour ne pas la surcharger. On comprend ainsi qu'une zone d'intérêt peu contrastée située dans la scène au voisinage d'un objet intense peut être masquée par l'image parasite de cet objet.

En comparant les deux figures précédentes, on constate que la lame éloigne les faisceaux utiles des faisceaux parasites. En amincissant le composant, on rapproche l'image parasite de l'image principale, ce qui est une bonne chose ; mais comme il est nécessaire de conserver une certaine épaisseur pour maintenir la déformation du composant (notamment en cours de fonctionnement) dans les limites de l'acceptable, le bénéfice reste insuffisant.

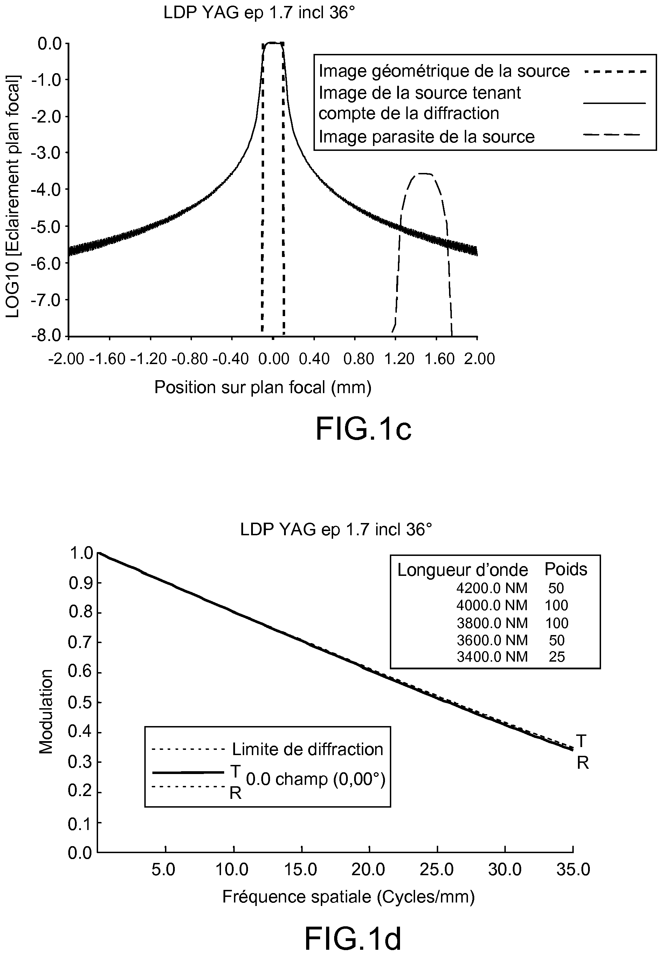

En outre, l'inclinaison de la lame dans le faisceau incident produit des aberrations de type coma et astigmatisme dans le front d'onde transmis ; ces deux effets sont d'autant plus marqués que la lame est épaisse. En rendant la lame légèrement prismatique et en orientant correctement le prisme dans le faisceau, c'est-à-dire en faisant en sorte que par rapport à l'axe optique incident Oz la face arrière de la lame soit plus inclinée que la face avant, on peut sensiblement -voire considérablement- réduire les aberrations. Malheureusement, l'orientation du prisme permettant de réduire les aberrations éloigne davantage l'image parasite de l'image principale par rapport à la simple lame à faces planes et parallèles, ce qui la rend encore plus visible, et par conséquent plus gênante. Ceci est illustré sur la figure 1c pour une telle lame dichroïque en YAG d'épaisseur 1,7 mm, travaillant à F/4.0, inclinée de 36° sur l'axe optique d'un système équipé de cette lame. La FTM polychromatique pondérée calculée en transmission dans la bande 3,4 µm-4,2 µm dans la direction radiale (R) et dans la direction tangentielle (T) est pratiquement limitée par la diffraction, comme le montre la figure 1d. Afin de ne pas surcharger la figure, seule la réponse au centre du champ a été représentée, mais on montre facilement que la FTM reste homogène dans un champ de diamètre 12 mm, compatible d'une utilisation avec un détecteur matriciel.

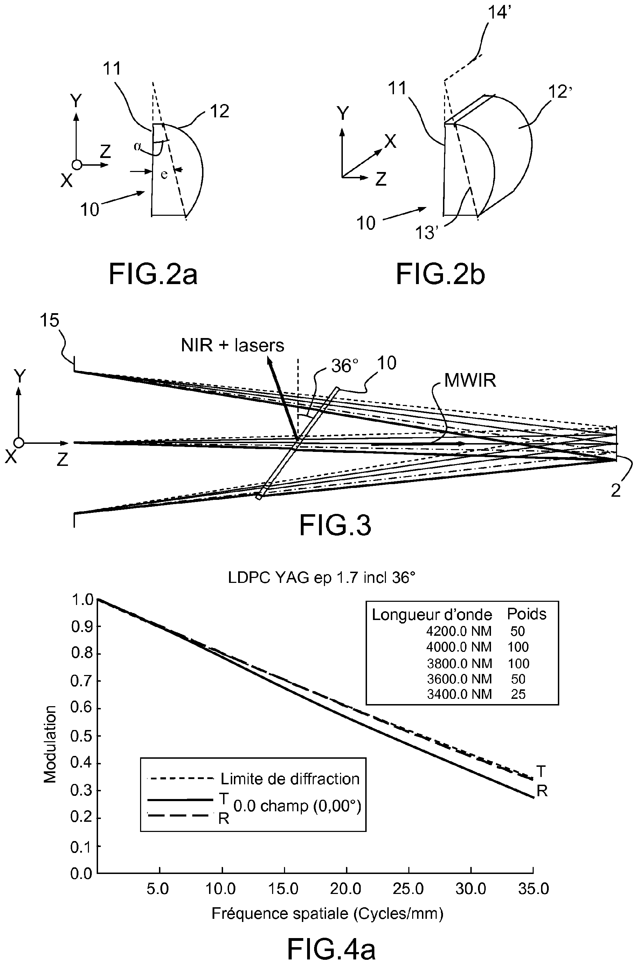

Une version simplifiée à deux sorties de l'ensemble séparateur à prismes décrit sur la figure 3 du brevet US 3 202 039 permet de répondre au besoin exprimé précédemment. Comme il n'existe pas de colle suffisamment transparente dans la bande MWIR, les deux prismes constitutifs doivent être séparés par une lame d'air de faible épaisseur. En outre, l'inclinaison des faisceaux sur la surface dichroïque interne oblige à réaliser les deux prismes dans un matériau optique d'indice de réfraction faible -typiquement inférieur à 1,7 - afin d'éviter toute réflexion totale des faisceaux MWIR à cet endroit. Compte-tenu des bandes spectrales utiles envisagées, cette condition restreint fortement le choix des matériaux. En pratique, seule la fluorine (= CaF2) d'indice 1,4 environ, mais fragile et difficile à mettre en oeuvre, peut être retenue pour cette application. En outre, comme ce matériau présente un fort coefficient de dilatation, le dépôt de l'empilement complexe de couches minces nécessaire à la fonction dichroïque est sujet à des rendements de production très aléatoires. Enfin, l'assemblage des deux prismes est particulièrement délicat. Bref, cette solution n'est pas vraiment industrielle, et d'un coût très élevé.

D'autres solutions ont été développées, notamment celles décrites dans les brevets suivants.
- US 4 412 723 décrit un correcteur d'aberration placé derrière une lame à faces planes et parallèles. Mais il n'y pas de suppression de l'image parasite.
- US 4 541 688 présente un dispositif qui répond au besoin pour des détecteurs de type barrette, mais n'est absolument pas utilisable pour des matrices ; en effet dans ce brevet on résout le problème posé en augmentant l'épaisseur de la lame de façon à faire sortir l'image parasite du champ de la barrette, et on corrige les aberrations introduites par cette surépaisseur à l'aide de composants annexes. Pour parvenir au même résultat avec un détecteur matriciel, il faudrait augmenter démesurément l'épaisseur du composant, ce qui rendrait plus délicate voire impossible la correction des aberrations induites.
- US 7502117 B1 décrit un interféromètre à deux ondes de type Michelson, dont le séparateur et le compensateur comportent au moins une surface non plane afin de détruire les interférences entre les différentes ondes parasites produites par les deux composants. Le compensateur et le séparateur ont la même puissance et ne sont pas prismatiques.
- EP 1 083 554 B1 / US 6 611 383 B1 présente une correction de l'astigmatisme par lame prismatique mais il n'y a pas de suppression de l'image parasite.

Le but de l'invention est de pallier ces inconvénients. En conséquence, il demeure à ce jour un besoin pour un composant de séparation spectrale donnant simultanément satisfaction à l'ensemble des exigences précitées, en termes d'image parasite perceptible en faisceaux convergents notamment dans la bande MWIR, d'aberrations, de FTM, de coût et de facilité de fabrication.

L'invention a pour objet un composant de séparation spectrale à deux faces, une face avant plane comportant un traitement dichroïque et une face arrière. Il est principalement caractérisé en ce que la face arrière est convexe selon une surface cylindrique définie par une génératrice de direction fixe se déplaçant perpendiculairement le long d'un arc de cercle comportant deux extrémités, le plan passant par ces deux extrémités et parallèle à la génératrice de la surface cylindrique formant un dièdre avec le plan de la face avant, la génératrice de la surface cylindrique étant parallèle à l'arête du dièdre.

Dit autrement il s'agit d'un composant de séparation spectrale, légèrement prismatique et cylindrique convexe pour effectuer la séparation spectrale en faisceau convergent.

L'angle de prismaticité du composant (= l'angle du dièdre) est optimisé de façon à ramener l'image parasite formée par les 2 faces du composant sous la tache de diffraction de l'image principale MWIR; dans ce but, le prisme est orienté dans le mauvais sens du point de vue des aberrations, en parfaite contradiction avec l'état de l'art, et introduit par conséquent une forte quantité de coma et d'astigmatisme dans le front d'onde, au lieu de les corriger. La face arrière du composant de séparation spectrale, légèrement cylindrique convexe, permet de compenser les aberrations apportées par la prismaticité du composant.

La face avant plane du composant de séparation spectrale porte le traitement dichroïque, et la face arrière cylindrique est simplement traitée antireflet MWIR.

In fine, on dispose d'une solution moins chère qu'un ensemble séparateur à prismes, plus facile à produire, et tout aussi performante.

L'invention a aussi pour objet un système optronique multi-spectral mono-pupille destiné à former une image d'un objet, et comportant sur son axe optique :
- un objectif convergent,
- un composant de séparation spectrale tel que décrit, incliné sur l'axe optique selon un angle d'inclinaison prédéterminé et
- un détecteur matriciel,
caractérisé en ce que l'axe optique du système étant sous forme de ligne brisée avec un axe optique incident sur le composant de séparation spectrale et un axe optique réfracté par le composant, le composant est incliné autour de l'axe parallèle à la génératrice de la surface cylindrique passant par l'intersection de l'axe optique incident avec la face avant plane, et l'angle d'inclinaison est tel que la face arrière du composant est moins inclinée sur l'axe optique incident que la face avant, de manière à ce que, l'image comportant une image principale tenant compte de la diffraction et une image parasite formée par double réflexion dans le composant de séparation spectrale, l'image parasite soit ramenée sous la tache de diffraction de l'image principale.

D'autres caractéristiques et avantages de l'invention apparaîtront à la lecture de la description détaillée qui suit, faite à titre d'exemple non limitatif et en référence aux dessins annexés dans lesquels :
les figures 1 déjà décrites représentent schématiquement une lame dichroïque en faisceau convergent inclinée sur l'axe optique, avec le plan focal intermédiaire où se forme l'image principale (fig 1a) et le plan focal intermédiaire où se forme l'image parasite (fig 1b), ainsi que les résultats obtenus pour un système équipé d'une telle lame (LDP pour Lame Dichroïque Prismatique) : un graphique (fig 1c) détaillant la répartition d'éclairement dans le plan focal intermédiaire pour l'image géométrique de la source, l'image de la source tenant compte de la diffraction et l'image parasite de la source, et la FTM MWIR pondérée calculée au centre du champ en transmission ainsi que la limite de diffraction (fig 1d),
les figures 2 représentent schématiquement un exemple de composant de séparation spectrale selon l'invention, vu en coupe (fig 2a) et en perspective (fig 2b),
la figure 3 représente schématiquement un exemple de composant de séparation spectrale en faisceau convergent incliné sur l'axe optique d'un système, selon l'invention,

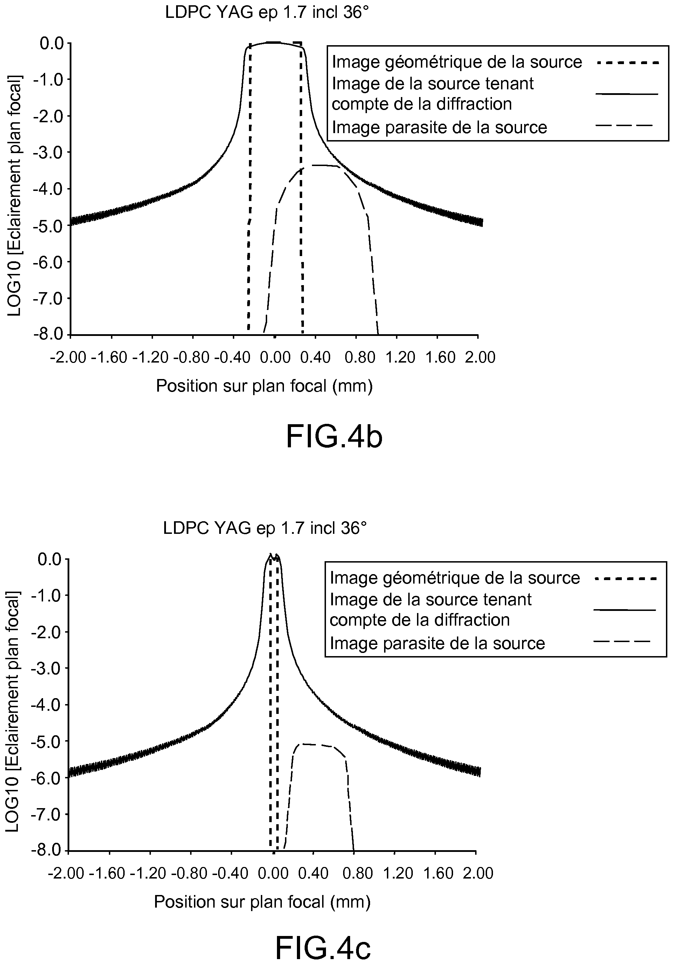

les figures 4 illustrent les résultats obtenus pour un système équipé d'un premier exemple de composant de séparation spectrale (LDPC pour Lame Dichroïque Prismatique Cylindrique) selon l'invention, sous forme de FTM MWIR pondérée calculée au centre du champ en transmission comparée à la limite de diffraction (fig 4a), et d'un graphique donnant la répartition d'éclairement dans le plan focal intermédiaire pour l'image géométrique, l'image tenant compte de la diffraction et l'image parasite d'un disque de 0,5 mm de diamètre (fig 4b) et de 0,05 mm de diamètre (fig 4c),

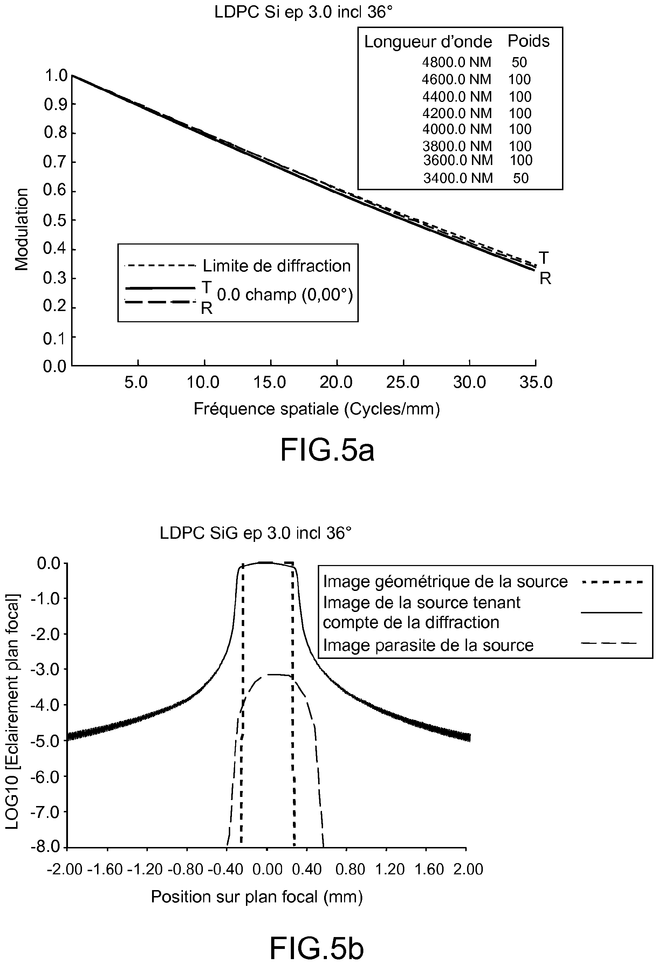

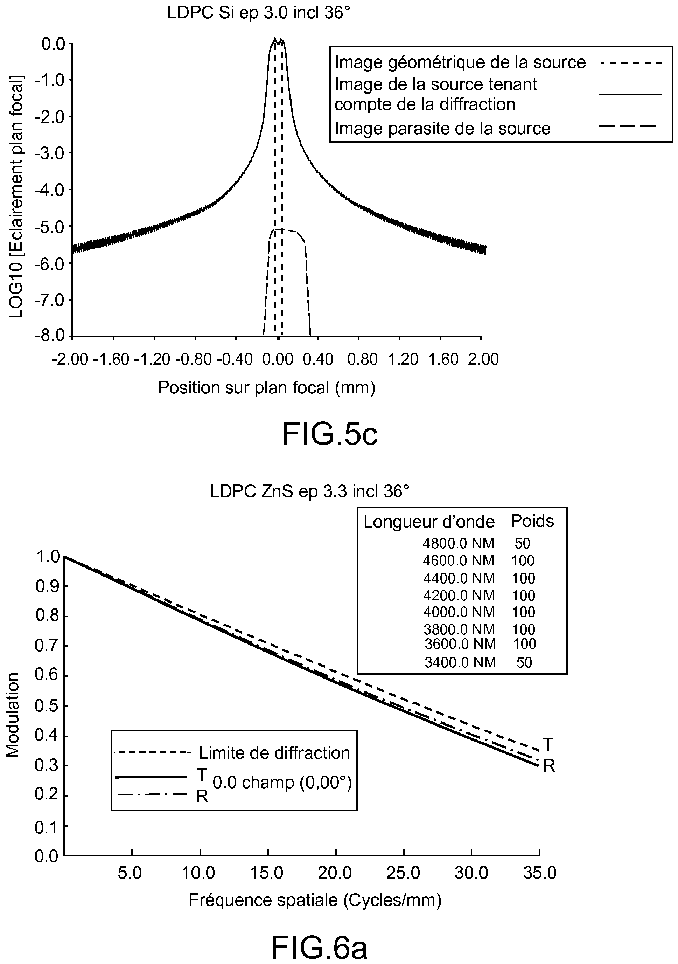

les figures 5 illustrent les résultats obtenus pour un système équipé d'un deuxième exemple de composant de séparation spectrale (LDPC pour Lame Dichroïque Prismatique Cylindrique) selon l'invention, sous forme de FTM MWIR pondérée calculée au centre du champ en transmission comparée à la limite de diffraction (fig 5a), et d'un graphique donnant la répartition d'éclairement dans le plan focal pour l'image géométrique, l'image tenant compte de la diffraction, et l'image parasite d'un disque de 0,5 mm de diamètre (fig 5b) et de 0,05 mm de diamètre (fig 5c),

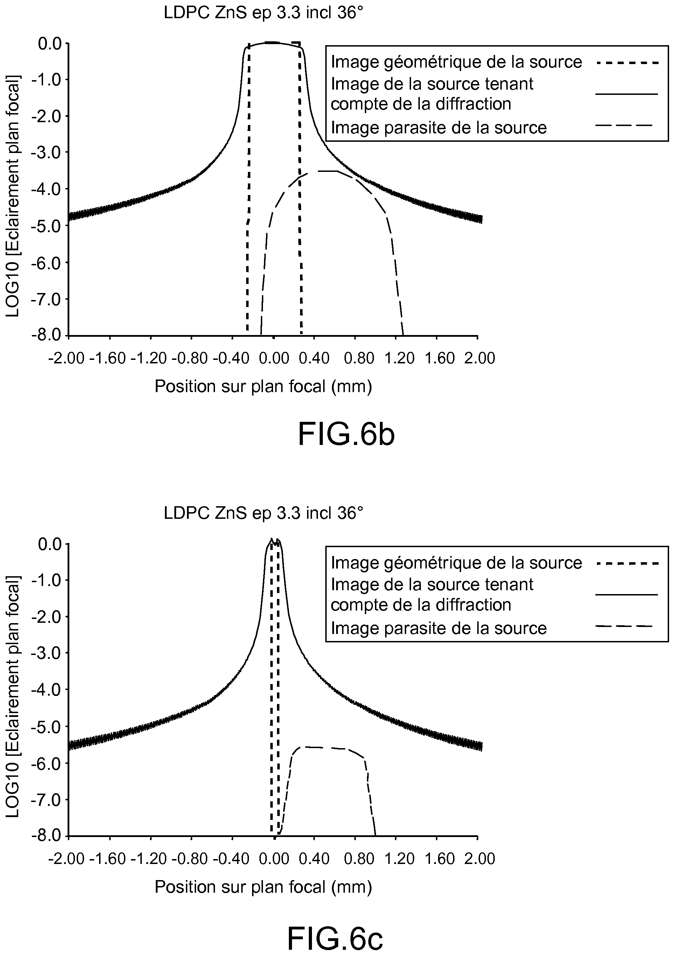

les figures 6 illustrent les résultats obtenus pour un système équipé d'un troisième exemple de composant de séparation spectrale (LDPC pour Lame Dichroïque Prismatique Cylindrique) selon l'invention, sous forme de FTM MWIR pondérée calculée au centre du champ en transmission, comparée à la limite de diffraction (fig 6a), et d'un graphique donnant la répartition d'éclairement dans le plan focal pour l'image géométrique, l'image tenant compte de la diffraction, et l'image parasite d'un disque de 0,5 mm de diamètre (fig 6b) et de 0,05 mm de diamètre (fig 6c).

D'une figure à l'autre, les mêmes éléments sont repérés par les mêmes références.

On décrit en relation avec les figures 2 (sur lesquelles les échelles ne sont pas respectées) un exemple de composant de séparation spectrale 10 selon l'invention.

Il comporte une surface avant plane 11 de séparation spectrale (ou dichroïque) et une surface arrière cylindrique convexe 12'.

Le traitement dichroïque est typiquement apte à transmettre des longueurs d'onde comprises entre 3 µm et 5 µm et éventuellement apte à réfléchir des longueurs d'onde inférieures à 3 µm ou supérieures à 8 µm.

La surface cylindrique 12' est définie par une génératrice de direction fixe se déplaçant perpendiculairement le long d'un arc de cercle 12 (très accentué sur ces figures) ayant deux extrémités. Le plan 13' passant par les deux extrémités de l'arc de cercle et parallèle à la génératrice de la surface cylindrique forme un dièdre avec le plan de la face avant 11 (dièdre très accentué sur ces figures), la génératrice de la surface cylindrique étant parallèle à l'arête 14' du dièdre. Pour des raisons pratiques, le sommet du dièdre est généralement coupé.

L'épaisseur moyenne « e » du composant de séparation spectrale est réduite autant que possible, dans les limites du raisonnable c'est-à-dire pour que la forme du composant soit conservée au montage et en cours de fonctionnement, avec un ratio diamètre/épaisseur typiquement compris entre 14 et 36. Sur la figure 2b, la face avant 11 du composant de séparation spectrale 10 est rectangulaire pour faciliter l'interprétation de la figure mais l'invention ne se limite pas à ce cas ; elle peut notamment être circulaire de diamètre D.

L'angle α du dièdre est ajusté de façon à noyer l'image parasite sous la tache de diffraction de l'image principale transmise, ce qui revient à orienter le prisme dans le mauvais sens du point de vue des aberrations. Il n'est pas nécessaire de superposer rigoureusement l'image parasite et l'image directe pour la masquer. Ceci permet de limiter les aberrations introduites par le prisme, qui sont alors plus facilement compensées par le cylindre.

Les aberrations induites par le prisme sont corrigées par la face cylindrique convexe arrière.

De façon générale, l'angle α du prisme et le rayon de courbure de la face arrière cylindrique (= rayon de l'arc de cercle 12) dépendent de l'étendue géométrique du faisceau MWIR, de l'angle d'inclinaison du composant sur l'axe optique du système dans lequel il est placé, de son indice de réfraction, de son épaisseur, de la position de la pupille et de la position du composant par rapport au plan focal. Plus l'angle d'inclinaison est élevé, moins il est aisé de trouver un compromis satisfaisant entre la qualité de front d'onde transmis et la dissimulation de l'image parasite.

Les deux paramètres -prismaticité et rayon de courbure de l'arc de cercle - sont déterminés expérimentalement ou s'optimisent à l'aide d'un logiciel de conception optique tel que les logiciels désignés sous leur marque commerciale ZEMAX™ ou Code V™. L'angle du dièdre est typiquement compris entre 0,4 mrd et 2 mrd ; l'arc de cercle a typiquement un rayon de courbure compris entre 10m et 100m.

Cette face arrière 12' est avantageusement traitée anti-reflet.

Préférentiellement, le composant de séparation spectrale est taillé dans un matériau d'indice de réfraction élevé, typiquement supérieur à 1,65 et de raideur suffisamment importante pour ne pas être déformé au montage et en cours de fonctionnement. En effet un indice élevé favorise le rapprochement de l'image parasite et de l'image principale, et limite les aberrations ; une raideur élevée permet de réduire l'épaisseur du composant, ce qui rapproche naturellement l'image parasite de l'image principale et atténue les aberrations.

Ainsi, les matériaux logiquement candidats sont par exemple le silicium (Si), le YAG (Y₃Al₅O₁₂), le spinel (MgAl₂O₄), l'Al₂₃O₂₇N₅ désigné sous sa marque commerciale ALON™, et l'oxyde de magnésium (MgO). Des matériaux de raideur moins élevée, comme de sulfure de zinc (ZnS), le séléniure de zinc (ZnSe), le germanium (Ge), ou l'arséniure de gallium (GaAs) peuvent néanmoins être utilisés, avec des épaisseurs adaptées.

On considère à présent un système optronique multi-spectral mono-pupille utilisant un capteur matriciel et comportant un composant de séparation spectrale tel que décrit précédemment. Le composant de séparation spectrale 10 est incliné d'un angle de 36° sur l'axe optique Oz du système autour de l'axe parallèle à la génératrice de la surface cylindrique 12' passant par l'intersection de l'axe optique incident avec la face avant 11 plane. Le sommet du dièdre pointe vers le haut (dans le quadrant YoZ avec Y et Z positifs) si le composant est basculé vers le bas comme montré sur la figure 3. Il est situé en aval d'un objectif multispectral frontal convergent supposé parfait (non représenté sur les figures) qui en bande MWIR travaille avec une ouverture de F/4 et un champ image de dimensions 9,6 mm x 7,2 mm, soit une diagonale de 12 mm. La pupille 15 est située à environ 220 mm en amont du plan focal 2 de l'objectif, et le composant 10 à environ 130 mm.

On suppose de plus qu'en MWIR la réflectance parasite de la face avant 11 est de 7%, et celle de la face arrière 12' de 1% ce qui est accessible pour ce type de composant.
De façon évidente, ce type de composant n'introduit pas d'aberration dans le faisceau réfléchi. Par conséquent, aux imperfections de réalisation près, on peut considérer qu'en réflexion, la FTM n'est pas dégradée.

Selon un premier exemple de réalisation, le composant de séparation spectrale est en YAG et a une épaisseur moyenne « e » de 1,7 mm. L'angle α du dièdre est d'environ 0,06° (=1,05 mrad). La face arrière 12' est cylindrique convexe avec un rayon d'arc de cercle d'environ 38 m.

La FTM polychromatique pondérée du système équipé de ce composant, calculée en transmission dans la bande 3,4 µm-4,2 µm, est limitée par le chromatisme et est très proche de la diffraction, comme le montre la figure 4a pour le centre du champ. Ceci reste vrai dans tout le champ : ce qui signifie que le composant de séparation spectrale ne dégrade pas significativement la FTM optique du système, et ceci en tout point du champ. L'écart entre le barycentre de l'image parasite et l'image directe (ou principale) est d'environ 410 µm, ce qui suffit à faire rentrer l'image parasite sous la diffraction de l'image directe. Les deux figures 4b et 4c en donnent l'illustration, respectivement pour les images d'un disque de diamètre 0,5 mm et pour celles d'un disque de diamètre 0,05 mm.

Selon un deuxième exemple de réalisation, le composant de séparation spectrale est en silicium et a une épaisseur moyenne de 3 mm. L'angle α du dièdre est d'environ 0,04° (= 0,7 mrad). La face arrière 12' est cylindrique convexe avec un rayon d'arc de cercle d'environ 83 m.

Comme dans l'exemple précédent, la FTM pondérée du système équipé de ce composant, calculée dans la bande 3,4 µm-4,8 µm en transmission, est très proche de la diffraction, comme le montre la figure 5a pour le centre du champ ; et il en est de même dans tout le champ.

L'écart entre le barycentre de l'image parasite et l'image directe (ou principale) est d'environ 86 µm, ce qui est plus que suffisant pour faire rentrer l'image parasite sous la diffraction de l'image directe. Les deux figures 5b et 5c en donnent l'illustration, respectivement pour les images d'un disque de diamètre 0,5 mm et de diamètre 0,05 mm.

Selon un troisième exemple de réalisation, le composant de séparation spectrale est en sulfure de zinc et a une épaisseur moyenne de 3,3 mm. L'angle α du dièdre est d'environ 0,08° (1,4 mrad). La face arrière 12' est cylindrique convexe avec un rayon d'arc de cercle d'environ 34 m. Comme dans l'exemple précédent, la FTM pondérée du système équipé de ce composant, calculée dans la bande 3,4 µm-4,8 µm en transmission, est très proche de la diffraction, comme le montre la figure 6a pour le centre du champ ; et il en est de même dans tout le champ.

L'écart entre le barycentre de l'image parasite et l'image directe est d'environ 450 µm, ce qui est suffisant pour faire rentrer l'image parasite sous la diffraction de l'image directe. Les deux figures 6b et 6c en donnent l'illustration, respectivement pour les images d'un disque de diamètre 0,5 mm et de diamètre 0,05 mm.

## Revendications

1. Composant de séparation spectrale (10) à deux faces, une face avant (11) plane comportant un traitement dichroïque et une face arrière (12'), **caractérisé en ce que** la face arrière (12') est convexe selon une surface cylindrique définie par une génératrice de direction fixe se déplaçant perpendiculairement le long d'un arc de cercle (12) comportant deux extrémités, le plan (13') passant par ces deux extrémités et parallèle à la génératrice de la surface cylindrique formant un dièdre avec le plan de la face avant (11), la génératrice de la surface cylindrique étant parallèle à l'arête (14') du dièdre.

2. Composant de séparation spectrale selon la revendication précédente, **caractérisé en ce que** la face arrière (12') est traitée anti-reflet.

3. Composant de séparation spectrale selon l'une des revendications précédentes, **caractérisé en ce que** le traitement dichroïque est apte à transmettre des longueurs d'onde comprises entre 3 µm et 5 µm.

4. Composant de séparation spectrale selon la revendication précédente, **caractérisé en ce que** le traitement dichroïque est apte à réfléchir des longueurs d'onde inférieures à 3 µm.

5. Composant de séparation spectrale selon l'une des revendications précédentes, **caractérisé en ce qu'**il est circulaire de diamètre D et présente une épaisseur e tels que D/e est compris entre 14 et 36.

6. Composant de séparation spectrale selon l'une des revendications précédentes, **caractérisé en ce que** l'angle du dièdre est compris entre 0,4 mrd et 2 mrd.

7. Composant de séparation spectrale selon l'une des revendications précédentes, **caractérisé en ce que** l'arc de cercle a un rayon de courbure compris entre 10m et 100m.

8. Composant de séparation spectrale selon l'une des revendications précédentes, **caractérisé en ce qu'**il est constitué d'un matériau de YAG ou Si ou ALON™ ou Spinel ou MgO ou ZnS ou ZnSe ou Ge ou GaAs.

9. Système optronique multi-spectral mono-pupille destiné à former une image d'un objet, comportant sur son axe optique :
- un objectif convergent,
- un composant de séparation spectrale (10) selon l'une des revendications précédentes, incliné sur l'axe optique selon un angle d'inclinaison prédéterminé et
- un détecteur matriciel,
**caractérisé en ce que** l'axe optique (Oz) du système étant sous forme de ligne brisée avec un axe optique incident sur le composant de séparation spectrale (10) et un axe optique réfracté par le composant, le composant est incliné sur l'axe optique incident autour de l'axe parallèle à la génératrice de la surface cylindrique passant par l'intersection de l'axe optique incident avec la face avant plane (11), et l'angle d'inclinaison est tel que la face arrière (12') du composant est moins inclinée sur l'axe optique incident que la face avant (11), de manière à ce que, l'image comportant une image principale tenant compte de la diffraction et une image parasite formée par double réflexion dans le composant de séparation spectrale, l'image parasite soit ramenée sous la tache de diffraction de l'image principale.

10. Système optronique multi-spectral mono-pupille selon la revendication précédente, **caractérisé en ce que** l'angle d'inclinaison est compris entre 30° et 45°.

## Patentansprüche

1. Spektraltrennungskomponente (10) mit zwei Seiten, einer ebenen Vorderseite (11), umfassend eine dichroitische Behandlung, und einer Rückseite (12'), **dadurch gekennzeichnet, dass** die Rückseite (12') konvex ist gemäß einer zylindrischen Fläche, die durch eine Erzeugende mit fixer Richtung definiert ist, die sich perpendikulär entlang einem zwei Enden umfassenden Kreisbogen (12) fortbewegt, wobei die Ebene (13'), die durch diese beiden Enden verläuft und parallel zur Erzeugenden der zylindrischen Fläche ist, ein Dieder mit der Ebene der Vorderseite (11) bildet, wobei die Erzeugende der zylindrischen Fläche parallel zur Kante (14') des Dieders ist.

2. Spektraltrennungskomponente nach dem vorstehenden Anspruch, **dadurch gekennzeichnet, dass** die Rückseite (12') antireflexbehandelt ist.

3. Spektraltrennungskomponente nach einem der vorstehenden Ansprüche, **dadurch gekennzeichnet, dass** die dichroitische Behandlung dazu geeignet ist, zwischen 3 µm und 5 µm liegende Wellenlängen zu übertragen.

4. Spektraltrennungskomponente nach dem vorstehenden Anspruch, **dadurch gekennzeichnet, dass** die dichroitische Behandlung dazu geeignet ist, Wellenlängen unter 3 µm zu reflektieren.

5. Spektraltrennungskomponente nach einem der vorstehenden Ansprüche, **dadurch gekennzeichnet, dass** sie kreisförmig mit Durchmesser D ist und eine Dicke e aufweist solcherart, dass D/e zwischen 14 und 36 liegt.

6. Spektraltrennungskomponente nach einem der vorstehenden Ansprüche, **dadurch gekennzeichnet, dass** der Winkel des Dieders zwischen 0,4 mrd und 2 mrd liegt.

7. Spektraltrennungskomponente nach einem der vorstehenden Ansprüche, **dadurch gekennzeichnet, dass** der Kreisbogen einen zwischen 10m und 100m liegenden Krümmungsradius hat.

8. Spektraltrennungskomponente nach einem der vorstehenden Ansprüche, **dadurch gekennzeichnet, dass** sie aus einem YAG- oder Si- oder ALON™- oder Spinell- oder MgO- oder ZnS- oder ZnSe- oder Ge- oder GaAs-Material besteht.

9. Monopupillares multispektrales optronisches System zum Bilden eines Bildes von einem Objekt, umfassend auf seiner optischen Achse:
- ein Konvergenzobjektiv,
- eine Spektraltrennungskomponente (10) nach einem der vorstehenden Ansprüche, geneigt zur optischen Achse gemäß einem vorgegebenen Neigungswinkel, und
- einen Matrixdetektor,
**dadurch gekennzeichnet, dass**, da die optische Achse (Oz) des Systems in Form einer gebrochenen Linie ist mit einer auf die Spektraltrennungskomponente (10) einfallenden optischen Achse und einer von der Komponente gebrochenen optischen Achse, die Komponente geneigt ist zur einfallenden optischen Achse um die Achse, die parallel ist zur Erzeugenden der zylindrischen Fläche, verlaufend durch die Schnittstelle der einfallenden optischen Achse mit der ebenen Vorderseite (11), und der Neigungswinkel so ist, dass die Rückseite (12') der Komponente weniger zur einfallenden optischen Achse geneigt ist als die Vorderseite (11), so dass, da das Bild ein die Beugung berücksichtigendes Hauptbild und ein durch doppelte Reflexion in der Spektraltrennungskomponente gebildetes Störbild umfasst, das Störbild unter den Beugungsfleck des Hauptbildes gebracht wird.

10. Monopupillares multispektrales optronisches System nach dem vorstehenden Anspruch, **dadurch gekennzeichnet, dass** der Neigungswinkel zwischen 30° und 45° liegt.

## Claims

1. A spectral splitting component (10) that has two faces, a planar front face (11) comprising a dichroic treatment and a rear face (12'), **characterised in that** the rear face (12') is convex and forms a cylindrical surface defined by a generatrix of fixed direction moving perpendicularly along a circular arc (12) comprising two ends, the plane (13') passing through these two ends and parallel to the generatrix of the cylindrical surface forming a dihedral with the plane of the front face (11), the generatrix of the cylindrical surface being parallel to the edge (14') of the dihedral.

2. The spectral splitting component according to the preceding claim, **characterised in that** the rear face (12') is given an anti-reflection treatment.

3. The spectral splitting component according to either of the preceding claims, **characterised in that** the dichroic treatment is able to transmit wavelengths of between 3 µm and 5 µm.

4. The spectral splitting component according to the preceding claim, **characterised in that** the dichroic treatment is able to reflect wavelengths shorter than 3 µm.

5. The spectral splitting component according to any of the preceding claims, **characterised in that** it is circular with diameter D and has a thickness e such that D/e is between 14 and 36.

6. The spectral splitting component according to any of the preceding claims, **characterised in that** the angle of the dihedral is between 0.4 mrd and 2 mrd.

7. The spectral splitting component according to any of the preceding claims, **characterised in that** the circular arc has a radius of curvature of between 10 m and 100 m.

8. The spectral splitting component according to any of the preceding claims, **characterised in that** it is made of a YAG or Si or ALON™ or Spinel or MgO or ZnS or ZnSe or Ge or GaAs material.

9. A mono-pupil multispectral optronic system intended to form an image of an object, and comprising on its optical axis:
- a convergent objective;
- a spectral splitting component (10) according to any of the preceding claims, inclined to the optical axis at a pre-determined angle of inclination, and
- a matrix detector,
**characterised in that**, since the optical axis (Oz) of the system is in the form of a broken line with an optical axis incident on the spectral splitting component (10) and an optical axis refracted by the component, the component is inclined on the optical axis about the axis parallel to the generatrix of the cylindrical surface passing via the intersection of the incident optical axis with the planar front face (11), and the angle of inclination is such that the rear face (12') of the component is less inclined to the incident optical axis than the front face (11) so that, the image comprising a main image taking account of diffraction and a ghost image formed by double reflection in the spectral splitting component, the ghost image is shifted back under the diffraction spot of the main image.

10. The mono-pupil multispectral optronic system according to the preceding claim, **characterised in that** the angle of inclination is between 30° and 45°.
